(19) Europäisches Patentamt
European Patent Office
Office européen des brevets

(11) **EP 4 071 267 A1**

(12) **EUROPEAN PATENT APPLICATION**

(43) Date of publication:
**12.10.2022   Bulletin 2022/41**

(21) Application number: **21167250.6**

(22) Date of filing: **07.04.2021**

(51) International Patent Classification (IPC):
***C23C 4/11*** (2016.01)       ***C23C 4/129*** (2016.01)
***C23C 4/134*** (2016.01)

(52) Cooperative Patent Classification (CPC):
**C23C 4/11; C09D 1/00; C23C 4/123; C23C 4/129;
C23C 4/134**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Treibacher Industrie AG
9330 Treibach-Althofen (AT)**

(72) Inventors:
• **Susnjar, Johann
9374 Wieting (AT)**
• **Trache, Richard
9020 Klagenfurt (AT)**
• **Curry, Nicholas
5662 Bruck an der Großglocknerstraße (AT)**

(74) Representative: **Schwarz & Partner Patentanwälte
GmbH
Patentanwälte
Wipplingerstraße 30
1010 Wien (AT)**

(54) **SUSPENSION FOR THERMAL SPRAY COATINGS**

(57)    The present invention relates to a suspension for suspension thermal spraying comprising solid ceramic particles and a solvent, characterized in that the fine fraction ratio of said suspension is 0.5 or lower, wherein the fine fraction ratio is defined as the ratio of the volume fraction of solid ceramic particles having a particle size of 1.0 $\mu$m or lower as determined form the particle size distribution, and the mass fraction of solid ceramic particles in the suspension.

Fig. 1A

**Description**

The invention relates to a suspension for suspension thermal spraying.

**Background of the invention**

Suspension thermal spraying, for example suspension plasma spraying, has become an emerging technology for producing coatings.

Suspensions as feedstock materials in thermal spraying allow for the use of fine particles with an average size (d50) of typically below 10 μm and offer a lot of advantages compared to conventional thermal spraying with solid feedstocks such as powders. In suspension thermal spraying, lower surface roughness, lower coating porosity and smaller pore diameters can be obtained. Further, suspension thermal spraying with small particles is beneficial for pneumatic thermal spraying feeding systems.

Depending on the suspension properties (e.g. viscosity, surface tension, particle size, solids loading), columnar or dense coatings are formed by suspension thermal spraying. Additionally, coatings with a thickness of a few micrometers can be obtained with a suspension feedstock. Smooth, dense coatings are of particular interest for wear and corrosion resistance applications and electrical insulation.

A preferred suspension thermal spraying method for producing dense coatings is suspension plasma spraying (SPS). In suspension plasma spraying, the suspension is injected into a thermal spray jet of hot and high-speed plasma gas, in which it is atomized into smaller droplets. Then, the liquid vaporizes and at the same time the original solid particles agglomerate and thereby increase in size. These spray particles get melted by the hot plasma gas and are accelerated towards the surface that is to be coated. By impacting on the cold and solid surface, the spray particles are flattened into so called splats, cool down, solidify and form the thermally sprayed coating.

The general principal of suspension plasma spraying of dense ceramic coatings is disclosed in US 5,609,921 A, US 6,579,573 B2 and US 2006/0222777 A1.

VanEvery et al. (Journal of Thermal Spray Technology, 2011, 20 (4), 817-828) discusses the influence of the suspension droplet size and depositing particle size on the coating microstructure. Small depositing particles with low inertia follow the gas jet near the substrate and are deposited with an impact angle not perpendicular to the substrate plane and columnar structures (defects) are formed. On the contrary, large depositing particles with high inertia keep their trajectory and impact with an angle close to 90° towards the coating surface and form a dense microstructure. Typically, when starting from the same suspension droplet size, small depositing particles are formed if the suspension contains small solid particles at a low concentration, while large depositing particles are formed if the suspension contains large particles or small particles at high concentration.

Further background on the coating formation is disclosed by L. Pawlowski, Surface & Coatings Technology 2009, 203 (19), 2807-2829. Curry et al. (Coatings, 2015, 5, 338-356) discloses that the suspension droplet size is controlled by the suspension properties, especially by the viscosity, surface tension and density (solids loading) of the suspension. Further prior art is disclosed by Kitamura et al., Journal of Thermal Spray Technology, 2011, 20 (1-2), 170-185, US 2019/0242001 A1 and Aghasibeig et al., Journal of Thermal Spray Technology, 2019, 28, 1579-1605.

Commercially available suspensions are ethanol-based for the production of columnar coatings, or water based for the production of dense coatings. Mixtures of ethanol and water are also reported, but not widely used in the industry.

State of the art suspensions for wear resistant coatings usually contain chromia, aluminia or titania from about 25 to 40 wt% in a water-based liquid. For applications where smooth and dense coatings are required, these suspensions lead to increased creation of columnar defects (Kiilakoski et al., Journal of Thermal Spray Technology, 2019, 28, 1933-1944). These defects may be called "nodules".

Only when additional equipment is used to remove fine particles from the spray jet e.g. an air cross jet (Kiilakoski et al., Journal of Thermal Spray Technology, 2019, 28, 1933-1944) or a water shroud (US 10,279,365 B2), defect free coatings can be produced. Such additional equipment is unfavorable due to increased costs and effort.

**Short description of the invention**

It is the object of the present invention to overcome the drawbacks of the state of the art and to provide a suspension for suspension thermal spraying that allows producing dense coatings which are free of defects (nodules) without the use of additional technical measures such as air cross jets or water shrouds.

The object is solved by a suspension comprising solid ceramic particles and a solvent, characterized in that the fine fraction ratio (FFR) of said suspension is 0.5 or lower. According to the present invention, the fine fraction ratio is defined as the ratio of

- the volume fraction of solid ceramic particles having a particle size of 1.0 μm or lower as determined from the particle size distribution, and
- the mass fraction of solid ceramic particles in the suspension.

Thus, the present invention takes into account different size distributions of particles in the suspension and the particle agglomeration process in the spray jet during suspension spraying and defines a critical ratio between fine content in the particle size distribution of the solid content of a suspension and the concentration of solids in this suspension. The fine fraction ratio defines a minimum criteria for the suspension composition to form large enough spray particles that will naturally produce a dense coating structure with no nodules.

The present invention is particularly useful for producing corrosion, erosion and/or abrasion resistant coatings, particularly with a dense microstructure and a smooth surface.

The ability to reduce nodules is inherent to the suspension formulation. A low FFR reduces the formation of fine particles in the spray jet, thereby avoiding the formation of columnar defects. No further technical equipment like air cross jets or water shrouds is needed to remove fine particles from the spray jet.

The suspension according to the present invention having a low FFR allows to increase the spray distance, since bigger spray particles in the spray jet have a higher inertia. By increasing the spray distance, the thermal load on the coating is reduced and cracks by thermal stress are avoided. Further, when it is not necessary to remove fine particles from the spray jet by additional measures, the deposition efficiency is automatically higher, since more material reaches the substrate.

## Short description of the figures

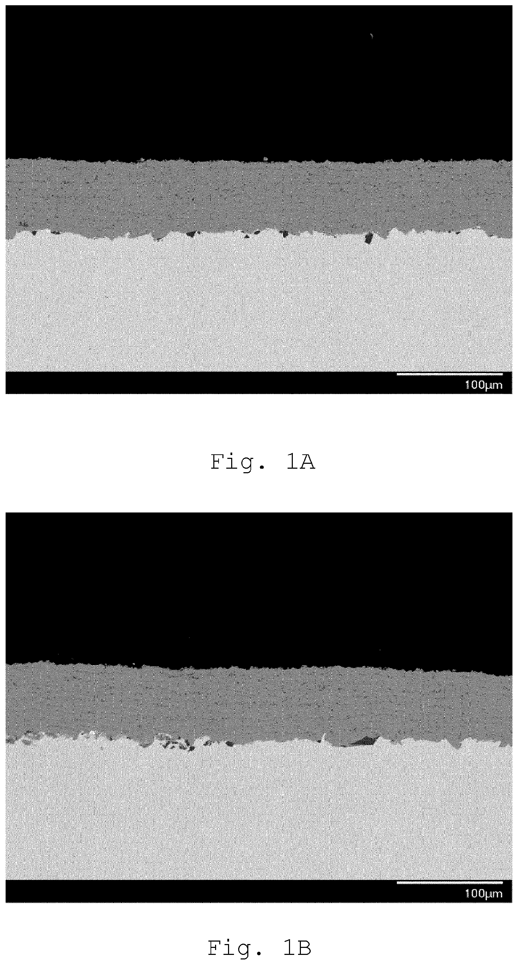

Fig. 1A shows a SEM BSE image of the polished cross section of the coating obtained in Example 1, displaying a dense, crack and nodule (defect) free microstructure and a smooth surface (magnification: 250x, accelerating voltage: 15.0 kV, working distance (WD): 10.3 mm). Fig. 1B shows a SEM BSE image of the same cross section continued (magnification: 250x, accelerating voltage: 15.0 kV, WD: 10.4 mm).

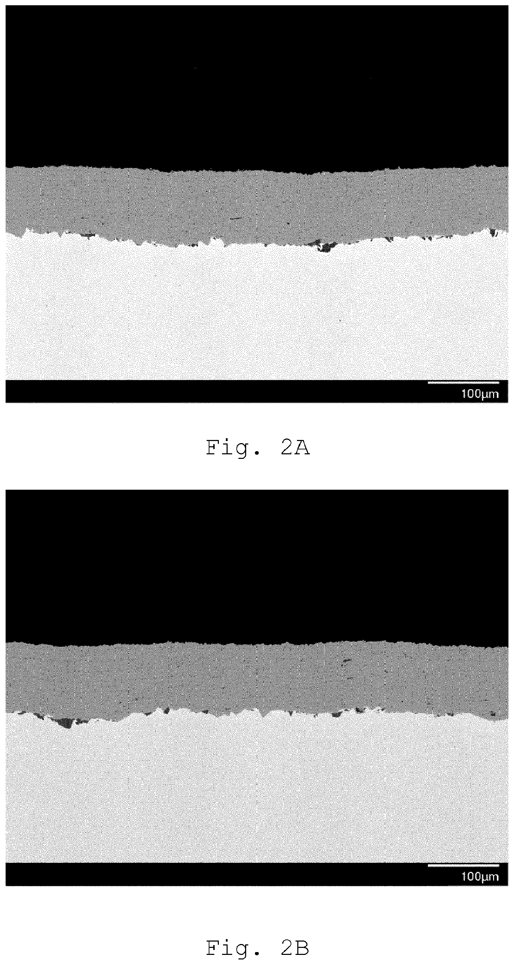

Fig. 2A shows a SEM BSE image of the polished cross section of the coating obtained in Example 2, displaying a dense, crack and nodule (defect) free microstructure and a smooth surface (magnification: 170x, accelerating voltage: 15.0 kV, WD: 10.2 mm). Fig. 2B shows a SEM BSE image of the same cross section continued (magnification: 170x, accelerating voltage: 15.0 kV, WD: 10.1 mm).

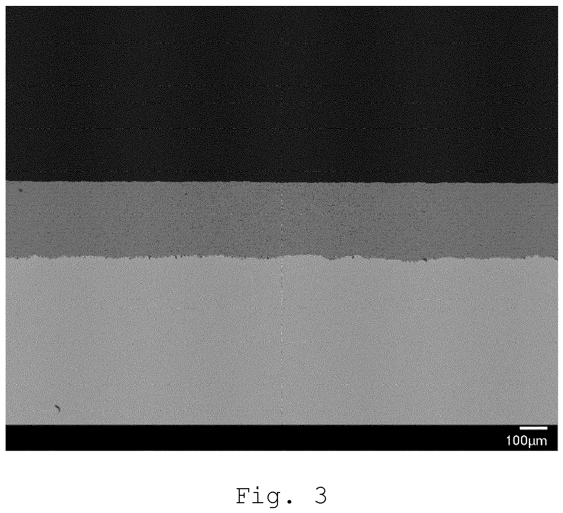

Fig. 3 shows a SEM BSE image of the polished cross section of the coating obtained in Example 3, displaying a dense, crack and nodule (defect) free microstructure and a smooth surface (magnification: 60x, accelerating voltage: 15.0 kV, WD: 10.1 mm).

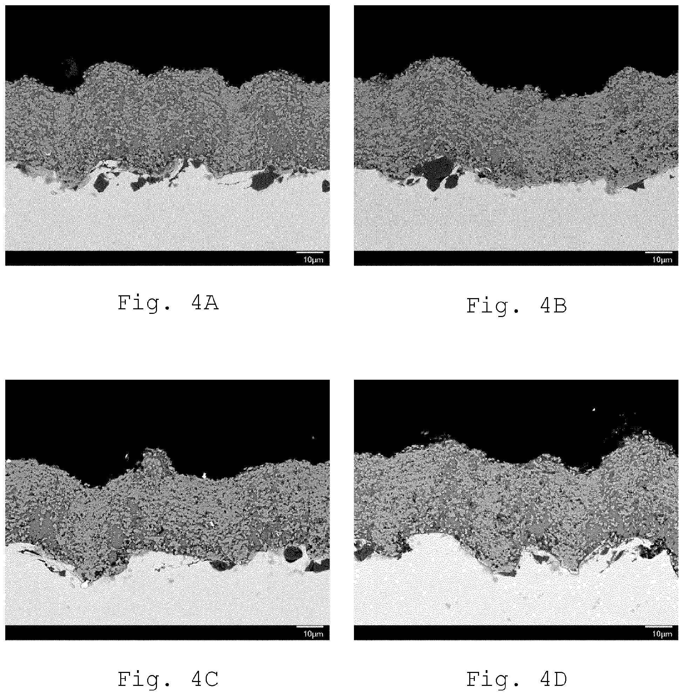

Fig. 4A-D show a SEM BSE images of the cross section of the coating obtained in Comparative Example 1A, displaying a bimodal coating structure with a bumpy (rough) surface (Fig. 4A: magnification: 1000x, accelerating voltage: 15.0 kV, WD: 11.5 mm; Fig. 4B: magnification: 1000x, accelerating voltage: 15.0 kV, WD: 11.5 mm; Fig. 4C: magnification: 1000x, accelerating voltage: 15.0 kV, WD: 10.0 mm; Fig. 4D: magnification: 1000x, accelerating voltage: 15.0 kV, WD: 9.8 mm).

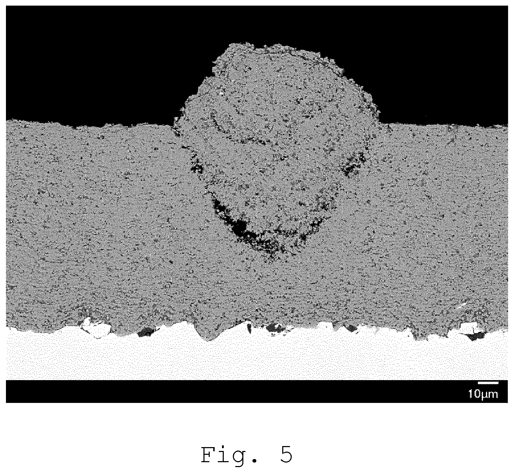

Fig. 5 shows a SEM BSE image of the cross section of the coating obtained in Comparative Example 1B, displaying an overall flat surface with isolated/sporadic surface bumps in form of nodules, that are formed by a single column (magnification: 500x, accelerating voltage: 15.0 kV, WD: 10.2 mm).

## Detailed description of the invention

The present invention provides in a first aspect a suspension for suspension thermal spraying comprising solid ceramic particles and a solvent, characterized in that the fine fraction ratio of said suspension is 0.5 or lower, wherein the fine fraction ratio is defined as the ratio of

- the volume fraction of solid ceramic particles having a particle size of 1.0 $\mu$m or lower as determined from the particle size distribution, and
- the mass fraction of solid ceramic particles in the suspension.

In a second aspect, the present invention provides the use of said suspension for suspension thermal spraying.

The following disclosure applies similarly to said first aspect and said second aspect.

As used herein, the term "suspension thermal spraying" refers to the use of a suspension as a feedstock in a thermal spraying processes, including plasma spraying (such as atmospheric plasma spraying and low pressure plasma spraying), high-velocity oxy-fuel spraying, high-velocity air-fuel spraying, flame spraying, cold spraying, laser spraying or laser cladding. Preferably, the suspension according to the present invention is used in suspension plasma spraying and low pressure plasma spraying and high velocity oxy fuel spraying, most preferably in suspension plasma spraying, specifically in atmospheric suspension plasma spraying.

For the purpose of the present specification and claims, the fine fraction ratio (FFR) is defined as the ratio of the volume fraction of solid ceramic particles having a particle size of 1.0 $\mu$m or lower and the mass fraction of solid ceramic particles in the suspension according to equation (1):

$$FFR = \frac{volume\ fraction\ of\ solid\ ceramic\ particles\ of\ \leq 1.0\ \mu m}{mass\ fraction\ of\ solid\ ceramic\ particles\ in\ the\ suspension} \tag{1}$$

According to the present invention, the fine fraction ratio is 0.5 or lower. Preferably, the fine fraction ratio is 0.4 or lower, more preferably 0.35 or lower.

The FFR ranges proposed here preferably apply to solid ceramic particles having a density between 3.0 and 7.0 g/cm$^3$, more preferably between 4.9 and 6.6 g/cm$^3$.

As used herein, the term "volume fraction" relates to the percentage of the total volume of solid ceramic particles having a particle size of 1.0 $\mu$m or lower relative to the total volume of all solid ceramic particles in the suspension. The volume fraction is given in vol%.

The term "mass fraction of the solid ceramic particles in the suspension" relates to the percentage of the total mass of all ceramic particles in the suspension relative to the total mass of the suspension (i.e. the sum of the masses of all components of the suspension). The mass fraction is given in wt%.

The volume fraction of particles having a particle size of 1.0 $\mu$m or lower is determined from the particle size distribution as obtained from particle size analysis. In the present invention, the particle size distribution is determined using laser diffraction particle analysis, preferably using a "Microtrac" particle analyser.

In such a particle analyser, the beam of the laser is scattered by the particles of the sample, and the angle of light scattering is inversely proportional to particle size. The particle size distribution is typically determined in intervals ("boxes").

According to the present invention, it is in particular favourable to minimize the volume fraction of particles having a particle size of 1 $\mu$m or lower in order to obtain dense coatings. To determine the volume fraction of these particles from the particle size distribution, the measurement values of the particle analyser instrument as close to 1.0 $\mu$m as possible are taken. The value at 1.0 $\mu$m is then determined by linear interpolation, in case the instrument does not provide the data for an interval exactly ending at 1.0 $\mu$m.

In the present invention, the particle size distribution is determined using a Microtrac S3500 or a Microtrac X100 instrument employing the Fraunhofer analysis mode (measurement mode: full range analysis (FRA) of absorbing particles). The term "full range analysis" refers to the determination of the particle size over the whole measurement range of the instrument and the term "absorbing particles" refers to particles which do not transmit light.

The Microtrac S3500 and X100 instruments determine the volume fraction of the particles in an interval ranging from 0.972 $\mu$m to 1.06 $\mu$m as the closest values to 1.0 $\mu$m.

Other instruments showing a sensitivity and measurement range comparable to the Microtrac S3500 or Microtrac X100, in particular a comparable lower limit of the detectable particle size and a comparable sensitivity in the lower size region, may be employed to determine the particle size distribution according to the present invention. The skilled person is aware of suitable instruments on the market.

According to a preferred embodiment, the volume fraction of the solid ceramic particles having a particle size of 1.0 $\mu$m or lower is below 30 vol%, preferably below 25 vol%.

In preferred embodiments, the solid ceramic particles of the inventive suspension display a particle size distribution with a d50 value ranging from 2.0 $\mu$m to 10.0 $\mu$m, preferably from 4.0 $\mu$m to 5.0 $\mu$m. The d50 value is to be understood as the "average particle size" and is determined from the particle size distribution. The d50 value is known as median diameter or medium value of the particle size distribution, being determined from a volume based representation (dv50) or from a number based representation (dn50). In the present application, the d50 value refers to the volume based representation, i.e. the particle diameter at 50 vol% in the cumulative distribution (e.g. a d50 of 2.0 $\mu$m means that 50 vol% of the particles have a smaller diameter than 2.0 $\mu$m).

In one embodiment, said solid ceramic particles comprise or consist of at least one oxide of a transition metal, a rare earth metal or a metal of group 13 or 14 of the periodic table.

The term "transition metal" as used herein refers to a transition metal element or a mixture thereof, i.e. more than one transition metal element. According to IUPAC, a transition metal is an element whose atom has an incomplete d sub-shell, or which can give rise to cations with an incomplete d sub-shell. However, for the purpose of the present specification and claims, the term "transition metal" shall only comprise the elements of groups 4-11 on the periodic table and Zn.

The term "rare earth metal" as used herein refers to the group of 17 chemically similar metallic elements including the lanthanides, yttrium and scandium. The lanthanides are defined as the series of elements with atomic numbers 57 to 71, all of which, except promethium, occur in nature (Extractive Metallurgy of Rare Earths, C. K. Gupta, N. Krishnamurthy, CRC).

If said solid ceramic particles comprise or consist of an oxide of a transition metal, said oxide is preferably chromium (III) oxide (chromia, $Cr_2O_3$) or titanium oxide (titania, $TiO_x$ with x preferably being 1.6 to 2, even more preferably with x being 1.6 to 1.9, or 2, i.e. $TiO_2$).

Said solid ceramic particles may also comprise or consist of an oxide of a rare earth metal, such as yttrium oxide (yttria, $Y_2O_3$).

If said solid ceramic particles comprise or consist of an oxide of a metal of group 13 of the periodic table, said oxide is preferably aluminium oxide (alumina, $Al_2O_3$).

If said solid ceramic particles comprise or consist of an oxide of a metal of group 14 of the periodic table, said oxide is preferably a silicate mineral comprising silicon dioxide (silica, $SiO_2$), for example aluminium silicate such as mullite ($3Al_2O_3 \cdot 2SiO_2$).

In particularly preferred embodiments, said solid ceramic particles are selected from the group consisting of chromium (III) oxide ($Cr_2O_3$), aluminium oxide ($Al_2O_3$), yttrium oxide ($Y_2O_3$), titanium oxide ($TiO_x$, wherein x preferably ranges from 1.6 to 2) and mixtures and/or composites thereof.

According to a preferred embodiment, the mass fraction of the solid ceramic particles in the suspension is at least 60 wt%, preferably at least 70 wt%, even more preferably at least 75 wt%. The mass fraction of the solid ceramic particles in the suspension may also be at least 80 wt% or higher.

According to the present invention, said solvent may comprise or consist of water or an organic solvent or a mixture thereof. The organic solvent may be selected from the group consisting of of alcohols, ketones, esters, glycols, glycol ethers, glycol ether esters or hydrocarbons or any combination thereof.

Preferably, the solvent comprises or consists of water, preferably deionized water. The solvent may also comprise an anti-freezing agent. An anti-freezing agent is especially useful if the solvent mainly or entirely consists of water. The solvent mainly consists of water if the water makes up at least 60 wt% of the solvent, preferably at least 70 wt%, or 75 wt%, or 80 wt%, or 85 wt%, or 90 wt%, or more.

The anti-freezing agent ensures that suspension remains liquid and stable at temperatures below 0 °C, which is beneficial for transport and storage of the suspension. Preferably, the suspension remains liquid at least at -10 °C. The anti-freezing agent may be selected from the group of glycols and alcohols. Preferably, the anti-freezing agent is ethylene glycol. The anti-freezing agent may also be ethanol or isopropanol.

According to a specific embodiment of the present invention, the solvent consists of a mixture of water and ethylene glycol. Preferably, the weight ratio of water to ethylene glycol ranges from 1:10 w/w to 1:1 w/w. For example, the solvent may consist of 70 wt% to 80 wt% water and 30 wt% to 20 wt% ethylene glycol.

In one aspect, the suspension according to the present invention further comprises a dispersing agent. The dispersing agent may be any chemical compound suitable for stabilizing a suspension for thermal spraying. The dispersing agent ensures that the particles remain well dispersed and do not form large agglomerates or sediment. The dispersing agent may for example be a polymeric salt, and inorganic salt or an organic molecule. The skilled person is aware of suitable dispersing agents for each type of solid ceramic particles.

Examples of suitable dispersing agents are 2-amino-2-methylpropanol (such as AMP 90™ and AMP 95™), ammonium polycarboxylate, 2-[2-(2-methoxyethoxy) ethoxy] acetic acid (MEEA), polyacrylic acid, polyethyleneimine, sodium metaphosphate, sodium tetraborate, triethanolamine, TRITON X-100™, Lopon® 888, sodium bicarbonate and citric acid. For example, particularly preferred dispersing agents for $Cr_2O_3$ are 2-amino-2-methyl-1-propanol and ammonium polycarboxylate. A suitable dispersing agent for $Al_2O_3$ is 2-amino-2-methyl-1-propanol or 2-[2-(2-methoxyethoxy) ethoxy] acetic acid (MEEA).

The present invention is however not limited to this exemplary list of dispersing agents.

The concentration of the dispersing agent is chosen in order to provide a homogeneous stable suspension and to lower the viscosity, said concentration depending on the concentration of solid ceramic particles in the suspension. The concentration of the dispersing agent may range from 0.1 wt% to 10 wt%, preferably from 0.5 to 5 wt%, even more preferably from 1 to 3 wt%, e.g. 1 wt%, relative to the content of solid ceramic particles.

The suspension according to the present invention may optionally further contain a binder. Preferably, the suspension according to the present invention has a viscosity at a shear rate of 100 - 1000 s$^{-1}$ of below 50 mPa*s, preferably below 40 mPa*s, even more preferably below 30 mPa*s. A low viscosity is favorable for the suspension thermal spraying process.

The suspension according to the present invention is particularly suitable for producing a coating with a dense microstructure and a smooth surface by suspension thermal spraying, preferably suspension plasma spraying. As understood herein, a "dense microstructure" is characterized by low porosity (i.e. below 10%, preferably below 5%) with small pores having a pore size below 20 $\mu$m, preferably below 10 $\mu$m, wherein the pores are evenly distributed. Additionally, the dense coating is preferably free of cracks of 50 $\mu$m and above, preferably of 10 $\mu$m and above. The skilled person is aware of suitable thermal spray parameters for obtaining dense coatings.

These coatings are preferably used for corrosion, erosion and abrasion protection of the coated material.

According to the present invention, a dense coating can be produced on any suitable substrate, such as a metal, a ceramic, a polymer, a ceramic matrix composite, a metal alloy and mixtures or composites thereof. For example, the substrate may consist of aluminum, iron, steel, preferably stainless steel.

The suspension according to the present invention can be produced by dispersing a solid ceramic raw material in a solvent as described herein and milling the suspension until the desired average particle size (d50) is obtained. Milling is performed optionally in the presence of a dispersing agent as described herein. Afterwards, the suspension is diluted to the desired solids concentration.

The present invention will now be explained in more detail in the following examples and comparative examples, without being limited thereto.

**Examples**

**Example 1**

4.944 kg of a commercially available $Cr_2O_3$ powder with an average particle size (d50) of 4.3 $\mu$m was used as raw material for the suspension. The purity was >99 wt% $Cr_2O_3$. The powder particle size was measured with the Microtrac S3500 with 5 droplets of a 5 wt% TSPP dispersant (Sodium pyrophosphate tetrabasic) in the measurement chamber. The following parameters were used: analysis mode: Fraunhofer, measurement mode: "FRA" (Full Range Analysis), particle transparency: absorbing mode, refractive index for water of 1.33, flow rate of 50% and an internal ultrasonic power of 30 watts for 40 seconds.

The raw material was dispersed at 80 wt% concentration of solids in 1.236 kg deionized water. 49 g of the dispersing agent Lopon® 888 (BK Giulini GmbH, Germany) was added to decrease the viscosity of the raw material suspension to enable the intense dispersing step. This corresponds to an amount of 1 wt% relative to the oxide content. The mixture was stirred for 15 minutes. The so produced $Cr_2O_3$ suspension contained 79.14 wt% of solids and 0.79 wt% of the dispersing agent Lopon® 888.

The suspension was stirred from the beginning until the end of production to avoid settling of the particles. The density of the suspension was 2.8 g/ccm and was measured with a graduated cylinder and a scale. The viscosity of the suspension was in the range of 14 to 15 mPas at 100 1/s shear rate, measured with a rheometer MCR 301 (Anton Paar, Austria). The final PSD (particle size distribution) was: d10: 0.61 $\mu$m; d50: 4.59 $\mu$m; d90: 10.85 $\mu$m.

The sample for measuring the particle size was prepared by diluting 10 ml of the suspension with 10 ml of deionized water and mixing with 5 droplets of a 5 wt% TSPP dispersant (Sodium pyrophosphate tetrabasic) by hand for one minute. A few droplets of the so prepared sample were used for the measurement. The equipment used was a Microtrac S3500. Before starting the measurement additional 5 droplets of a 5 wt% TSPP dispersant were put into the measurement chamber. The following parameters were used: analysis mode: Fraunhofer, measurement mode: "FRA" (Full Range Analysis), particle transparency: absorbing mode, refractive index for water of 1.33, flow rate of 70% and an internal ultrasonic power of 35 watts for 50 second. The volume fraction of the particles below 1.0 $\mu$m was 13.28 vol%. The calculated FFR was 0.17.

This suspension was used in a suspension plasma spray process as feedstock material. The suspension was feed into a spray torch (Axial III™, Northwest Mettech) using as suspension feeder (NanoFeeder™, Northwest Mettech) at a feed rate of 45 ml/min. The spray torch was operated with an Argon-Nitrogen-Hydrogen plasma gas composition with a flowrate of 220 standard liters per minute at a power setting of 23-25 kJ/1. The coating was deposited at a spray distances (torch nozzle exit to substrate surface) of 120 mm onto grit blasted stainless steel coupons with a diameter of 25 mm and a thickness of 5 mm. The samples were mounted on a fixture that was rotated around a vertical axis at 106 rounds per minute. The spray torch was moved 10 times in linear vertical direction over the rotating substrates to reach the desired coating thickness. Two air jets with 5 bars compressed air were mounted parallel to the torch and 1 air jet at 5 bars compressed air was mounted facing the coated samples to keep the coating surface temperature below 300°C during coating deposition.

A coating with a dense, crack and nodule (defect) free cross section and a smooth surface was obtained, as shown in the SEM BSE image of a polished cross section of the coating (Fig. 1A and Fig. 1B). SEM BSE images were taken on polished cross sections of the coatings. The coating cross sections were mounted in epoxy resin and then grinded with Siliconcarbide grinding paper and polished with diamond suspension until a mirror-polished surface finish was reached.

**Example 2**

10.192 kg of a commercially available $Cr_2O_3$ powder with an average particle size (d50) of 4.3 was used as raw material for the suspension. The measurement was the same as described in example 1. The purity was >99 wt% $Cr_2O_3$.

The raw material was dispersed at 80 wt% concentration of solids in 2.548 kg deionized water. 102 g of the dispersing agent Lopon® 888 (BK Giulini GmbH, Germany) was added to decrease the viscosity of the raw material suspension to enable the intense dispersing step. This corresponds to an amount of 1 wt% relative to the oxide content. The mixture was stirred for 15 minutes. The oxide material was milled on a WAB Dyno-Mill Multilab high energy ball mill. Milling was carried out to obtain a well dispersed suspension without containing agglomerates. Milling balls with a diameter of 1 mm were used. The so produced $Cr_2O_3$ suspension contained 79.54 wt% of solids and 0.79 wt% of the dispersing agent Lopon® 888.

The suspension was stirred from the beginning until the end of production to avoid settling of the particles. The density of the suspension was 2.8 g/ccm and was measured with a graduated cylinder and a scale. The viscosity of the suspension was in the range of 23 to 24 mPas at 100 1/s shear rate, measured with a rheometer MCR 301 (Anton Paar, Austria). The final PSD (particle size distribution) was: d10: 0.24 $\mu$m; d50: 3.99 $\mu$m; d90: 8.82 $\mu$m. The measurement was the same as described in example 1. The volume fraction of the particles below 1.0 $\mu$m was 21.76 vol%. The calculated FFR was 0.27.

This suspension was used in a suspension plasma spray process as feedstock material. The suspension was feed into a spray torch (Axial III™, Northwest Mettech) using as suspension feeder (NanoFeeder™, Northwest Mettech) at a feed rate of 30 ml/min. The spray torch was operated with an Argon-Nitrogen-Hydrogen plasma gas composition with a flowrate of 220 standard liters per minute at a power setting of 23-25 kJ/1. The coating was deposited at a spray distances (torch nozzle exit to substrate surface) of 140 mm onto grit blasted stainless steel coupons with a diameter of 25 mm and a thickness of 5 mm. The samples were mounted on a fixture that was rotated around a vertical axis at 106 rounds per minute. The spray torch was moved 14 times in linear vertical direction over the rotating substrates to reach the desired coating thickness. Two air jets with 5 bars compressed air were mounted parallel to the torch and 1 air jet at 5 bars compressed air was mounted facing the coated samples to keep the coating surface temperature below 250°C during coating deposition.

A coating with a dense, crack and nodule (defect) free cross section and a smooth surface was obtained, as shown by the SEM BSE image of the polished cross section prepared with the same method as described in Example 1 (Fig. 2A and Fig. 2B).

**Example 3**

20.0 kg of a commercially available $Cr_2O_3$ powder with an average particle size (d50) 4.3 $\mu$m was used as raw material for the suspension. The measurement was the same as described in example 1. The purity was >99 wt% $Cr_2O_3$.

The raw material was dispersed at 79.3 wt% concentration of solids in 5.236 kg of a water/monoethyleneglycol mixture. The mixture was made by mixing 4.0 kg (76.4 wt%) deionized water and 1,236 kg (23.6 wt%) ethylene glycol (99%, Donau Chem GmbH, Austria). 200 g of the dispersing agent Lopon® 888 (BK Giulini GmbH, Germany) was added to decrease the viscosity of the raw material suspension to enable the intense dispersing step. This corresponds to an amount of 1 wt% relative to the oxide content. The oxide material was wet milled on a WAB Dyno-Mill Multilab high energy ball mill. Milling was carried out to obtain a well dispersed suspension without containing agglomerates. Milling balls with a diameter of 1 mm were used. After milling, the suspension was pumped through a 40 $\mu$m sieve to avoid coarse particle impurities. 300 ml water/MEG mixture was pumped through the mill to avoid too much loss of the suspension. This liquid was combined and mixed with the suspension.

The so produced $Cr_2O_3$ suspension contained 78.7 wt% concentration of solids and 0.79 wt% of the dispersing agent Lopon® 888. The suspension was stirred from the beginning until the end of production to avoid settling of the particles. The final PSD was: d10: 0.23 $\mu$m; d50: 3.66 $\mu$m; d90: 7.93 $\mu$m. The measurement was the same as described in example 1. The volume fraction of the particles below 1.06 $\mu$m was 24.25 vol%. The calculated FFR was 0.31.

This suspension was used in a suspension plasma spray process as feedstock material. The suspension was feed into a spray torch (Axial III™, Northwest Mettech) using as suspension feeder (NanoFeeder™, Northwest Mettech) at a feed rate of 30 ml/min. The spray torch was operated with an Argon-Nitrogen-Hydrogen plasma gas composition with a flowrate of 220 standard liters per minute at a power setting of 23-25 kJ/1. The coating was deposited at a spray distances (torch nozzle exit to substrate surface) of 160 mm onto grit blasted 50x30x5mm stainless steel plates. The samples were mounted on a fixture that was rotated around a vertical axis at 106 rounds per minute. The spray torch was moved 96 times in linear vertical direction over the rotating substrates to reach the desired coating thickness. Two air jets with 5 bars compressed air were mounted parallel to the torch and 1 air jet at 5 bars compressed air was mounted facing the coated samples to keep the coating surface temperature below 250°C during coating deposition.

A coating with a dense, crack and nodule (defect) free cross section and a smooth surface was obtained, as shown by the SEM BSE image of the polished cross section prepared with the same method as described in Example 1 (Fig. 3).

**Comparative Example 1**

2.3 kg of a commercially available $Cr_2O_3$ powder with an average particle size (d50) of 1.08 $\mu$m was used as raw material for the suspension. The powder particle size was measured with the Microtrac X100 with 5 droplets of a 5 wt% TSPP dispersant (Sodium pyrophosphate tetrabasic) in the measurement chamber. The following parameters were used: refractive index for water of 1.33, flow rate of 70% and an internal ultrasonic power of 35 watts for 50 second. The purity was >99 wt% $Cr_2O_3$.

The raw material was dispersed at 43.7 wt% concentration of solids in a water/monoethyleneglycol mixture. The mixture was made by mixing 1.978 kg (66.7 wt%) deionized water and 0.989 kg (33.3 wt%) ethylene glycol (99%, Donau Chem GmbH, Austria). 23 g of the dispersing agent AMP 90™ (BK Giulini GmbH, Germany) was added to decrease the viscosity of the raw material suspension to enable the intense dispersing step. AMP 90™ comprises 2-amino-2-methylpropanol and 10 wt% of water. The dispersing agent was added in an amount of 1 wt% relative to the oxide content and stirred for 20 minutes with a dissolver disc. 4.6 kg of the so produced $Cr_2O_3$ suspension with a measured concentration of solids of 43.5 wt% was used for the diluting step. To get the 40 wt% suspension, 0.4 kg deionized water was added during stirring. The suspension was stirred from the beginning until the end of production to avoid settling of the particles. The concentration of solids of the so produced suspension was 40.05 wt% and the concentration of the dispersing agent AMP 90™ was 0.4 wt%.

The viscosity of the suspension was in the range of 3 to 4 mPas at 100 1/s shear rate, measured with a rheometer MCR 301 (Anton Paar, Austria). The final PSD (particle size distribution) measurement was performed with the Microtrac S3500 and the parameters from example 1. The final PSD (particle size distribution) was: d10: 0.16 $\mu$m; d50: 0.86 $\mu$m; d90: 2.54$\mu$m. The volume fraction of the particles below 1.0 $\mu$m was 52.4 vol%. The calculated FFR was 1.31.

Comparative Example 1 A

This suspension was used in a suspension plasma spray process as feedstock material. The suspension was feed into a spray torch (Axial III™, Northwest Mettech) using as suspension feeder (NanoFeeder™, Northwest Mettech) at a feed rate of 30 ml/min. The spray torch was operated with an Argon-Nitrogen-Hydrogen plasma gas composition with a flowrate of 220 standard liters per minute at a power setting of 23-25 kJ/1. The coating was deposited at a spray distances (torch nozzle exit to substrate surface) of 160 mm onto grit blasted steel tube with a diameter of 108 mm and a wall thickness of 4 mm. The tube was rotated around a horizontal axis at 382 rounds per minute. The spray torch was moved 30 times in linear horizontal direction over the rotating tube to reach the desired coating thickness. Two air jets with 5 bars compressed air were mounted parallel to the torch and 1 air jet at 5 bars compressed air was mounted towards the tube surface to keep the coating surface temperature below 250°C during coating deposition.

SEM analysis of the polished cross section of the obtained coating prepared with the same method as described in Example 1 reveals a bimodal coating structure with a bumpy (rough) surface (Fig. 4 A-D).

Comparative Example 1 B

The same suspension was used in a suspension plasma spray process as feedstock material. The suspension was feed into a spray torch (Axial III™, Northwest Mettech) using as suspension feeder (NanoFeeder™, Northwest Mettech) at a feed rate of 45 ml/min. The spray torch was operated with an Argon-Nitrogen-Hydrogen plasma gas composition with a flowrate of 220 standard liters per minute at a power setting of 23-25 kJ/1. The coating was deposited at a spray distances (torch nozzle exit to substrate surface) of 120 mm onto grit blasted stainless steel coupons with a diameter of 25 mm and a thickness of 5 mm. The samples were mounted on a fixture that was rotated around a vertical axis at 106 rounds per minute. The spray torch was moved 60 times in linear vertical direction over the rotating substrates to reach the desired coating thickness. Two air jets with 5 bars compressed air were mounted parallel to the torch and 1 air jet at 5 bars compressed air was mounted facing the coated samples to keep the coating surface temperature below 300°C during coating deposition.

SEM analysis of the polished cross section of the obtained coating prepared with the same method as described in Example 1 shows an overall flat surface with isolated/sporadic surface bumps in form of nodules, which are formed by a single column (Fig. 5).

**Comparative Example 2**

5.0 kg of a commercially available $Cr_2O_3$ powder with an average particle size (d50) of 4.3 μm was used as raw material for the suspension. The measurement was the same as described in example 1. The purity was >99 wt% $Cr_2O_3$.

The raw material was dispersed at 80 wt% concentration of solids in 1.25 kg of a water/monoethyleneglycol mixture. The mixture was made by mixing 0,955 kg (76.4 wt%)deionized water and 0.295 kg (23.6 wt%) monoethyleneglycol (99%, Donau Chem GmbH, Austria). 50 g of the dispersing agent Lopon® 888 (BK Giulini GmbH, Germany) was added to decrease the viscosity of the raw material suspension to enable the milling step. Dispersing agent was added in an amount of 1 wt% relative to the oxide content. The oxide material was wet milled on a WAB Dyno-Mill Multilab high energy ball mill. Milling was carried out to obtain a well dispersed suspension without containing agglomerates. Milling balls made of YSZ were used. After milling, the suspension was pumped through a 40 μm sieve to avoid coarse particle impurities. 500 ml water/MEG mixture was pumped through the mill to avoid too much loss of the suspension. This liquid was combined and mixed with the suspension. The so produced $Cr_2O_3$ suspension had a 78.25 wt% concentration of solids. The suspension was stirred from the beginning until the end of production to avoid settling of the particles. The density of the suspension was 2.6 g/ccm and was measured with a graduated cylinder and a scale. The suspension was diluted to 40.05 wt% concentration of solids by adding 6.2 kg of a water/MEG mixture as described above. The viscosity of the suspension was in the range of 2 to 3 mPas at 100 1/s shear rate, measured with a rheometer MCR 301 (Anton Paar, Austria). The final PSD (particle size distribution) was: d10: 0.53μm; d50: 4.55 μm; d90: 10.07μm. The measurement was the same as described in example 1. The volume fraction of the particles below 1.0 μm was 23.63 vol%. The calculated FFR was 0.59.

This suspension was used in a suspension plasma spray process as feedstock material. The suspension was feed into a spray torch (Axial III™, Northwest Mettech) using as suspension feeder (NanoFeeder™, Northwest Mettech) at a feed rate of 45 ml/min. The spray torch was operated with an Argon-Nitrogen-Hydrogen plasma gas composition with a flowrate of 220 standard liters per minute at a power setting of 23-25 kJ/1. The coating was deposited at a spray distances (torch nozzle exit to substrate surface) of 120 mm onto grit blasted stainless steel coupons with a diameter of 25 mm and a thickness of 5 mm. The samples were mounted on a fixture that was rotated around a vertical axis at 106 rounds per minute. The spray torch was moved 40 times in linear vertical direction over the rotating substrates to reach the desired coating thickness. Two air jets with 5 bars compressed air were mounted parallel to the torch and 1 air jet at 5 bars compressed air was mounted facing the coated samples to keep the coating surface temperature below 300°C during coating deposition.

Sufficient SEM BSE images of the coating cross section could not be obtained.

**Claims**

1. A suspension for suspension thermal spraying comprising solid ceramic particles and a solvent, **characterized in that** the fine fraction ratio of said suspension is 0.5 or lower, wherein the fine fraction ratio is defined as the ratio of

      - the volume fraction of solid ceramic particles having a particle size of 1.0 μm or lower as determined from the particle size distribution, and
      - the mass fraction of solid ceramic particles in the suspension.

2. The suspension according to claim 1, wherein the density of said solid ceramic particles is between 3.0 and 7.0 g/cm³, preferably between 4.9 and 6.6 g/cm³.

3. The suspension according to claim 1 or 2, wherein said solid ceramic particles are selected from the group consisting of $Cr_2O_3$, $Al_2O_3$, $Y_2O_3$, $TiO_x$, wherein x preferably ranges from 1.6 to 2, and mixtures and/or composites thereof.

4. The suspension according to any one of claims 1 to 3, wherein the volume fraction of said solid ceramic particles having a particle size of 1.0 μm or lower is below 30 vol%, preferably below 25 vol%.

5. The suspension according to any one of claims 1 to 4, wherein the solid ceramic particles have a particle size distribution with a $d_{50}$ value ranging from 2 μm to 10 μm, preferably from 4 μm to 5 μm.

6. The suspension according to any one of claims 1 to 5, wherein the solvent comprises or consists of water.

7. The suspension according to any one of claims 1 to 6, wherein the solvent comprises an anti-freezing agent.

8.  The suspension according to claim 7, wherein the anti-freezing agent comprises or consists of a glycol, preferably ethylene glycol, or an alcohol, preferably ethanol or isopropanol.

9.  The suspension according to any one of claims 1 to 8, wherein the solvent consists of a mixture of water and ethylene glycol, and wherein the weight ratio of water to ethylene glycol ranges from 1:10 w/w to 1:1 w/w.

10. The suspension according to any one of claims 1 to 9, further comprising a dispersing agent.

11. The suspension according to any one of claims 1 to 10, wherein the mass fraction of the solid ceramic particles in the suspension is at least 60 wt%, preferably at least 70 wt%, preferably at least 75 wt%.

12. The suspension according to any one of claims 1 to 11, wherein the fine fraction ratio is 0.4 or lower, preferably 0.35 or lower.

13. The suspension according to any one of claims 1 to 12, wherein the suspension has a viscosity at a shear rate of 100 - 1000 $s^{-1}$ of below 50 mPa*s, preferably below 40 mPa*s, even more preferably below 30 mPa*s.

14. Use of the suspension according to any one of claims 1 to 13 for suspension thermal spraying, preferably suspension plasma spraying.

15. Use according to claim 14 for producing a coating on a substrate, wherein said substrate is selected from the group consisting of a metal, a ceramic, a polymer, a metal alloy, and mixtures thereof.

Fig. 1A

Fig. 1B

Fig. 2A

Fig. 2B

Fig. 3

Fig. 4A

Fig. 4B

Fig. 4C

Fig. 4D

Fig. 5

Europäisches
Patentamt

European
Patent Office

Office européen
des brevets

# EUROPEAN SEARCH REPORT

Application Number

EP 21 16 7250

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/048752 A1 (IWASAKI RYO [JP] ET AL) 13 February 2020 (2020-02-13) * paragraphs [0002], [0052] - [0055]; examples 1,3,4; table 1 * | 1,3-10, 12-15 | INV. C23C4/11 C23C4/129 C23C4/134 |
| X | FÖRG ANDREA ET AL: "Suspension and coating characterization of high velocity suspension flame sprayed (HVSFS) mixed titanium oxide-titanium carbide coatings", SURFACE AND COATINGS TECHNOLOGY, ELSEVIER, NL, vol. 371, 30 August 2018 (2018-08-30), pages 90-96, XP085704593, ISSN: 0257-8972, DOI: 10.1016/J.SURFCOAT.2018.08.085 * Sections 1, 2.1, 3.1; figure 4; examples TC1, TC2 and TC3; tables 1, 2 * | 1,2,4-9, 13-15 | |
| X | AREVALO-QUINTERO O ET AL: "An investigation of the dispersion of YSZ, SDC, and mixtures of YSZ/SDC powders in aqueous suspensions for application in suspension plasma spraying", SURFACE AND COATINGS TECHNOLOGY, ELSEVIER, NL, vol. 205, no. 21, 18 May 2011 (2011-05-18) , pages 5218-5227, XP028231086, ISSN: 0257-8972, DOI: 10.1016/J.SURFCOAT.2011.05.028 [retrieved on 2011-05-27] * Sections 1, 3.1, 3.3.1; figures 1, 4; example batch No. C; tables 1, 4 * | 1,3-15 | TECHNICAL FIELDS SEARCHED (IPC) C23C C09G C09D |
| A | EP 3 778 981 A1 (FUJIMI INC [JP]) 17 February 2021 (2021-02-17) * paragraphs [0021] - [0051] * | 1-15 | |

The present search report has been drawn up for all claims

| Place of search | Date of completion of the search | Examiner |
|---|---|---|
| The Hague | 16 September 2021 | Martinavicius, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 16 7250

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2021

| Patent document cited in search report | | Publication date | Patent family member(s) | | Publication date |
|---|---|---|---|---|---|
| US 2020048752 | A1 | 13-02-2020 | CN | 110819933 A | 21-02-2020 |
| | | | JP | 2020026579 A | 20-02-2020 |
| | | | KR | 20200018300 A | 19-02-2020 |
| | | | TW | 202022140 A | 16-06-2020 |
| | | | US | 2020048752 A1 | 13-02-2020 |
| EP 3778981 | A1 | 17-02-2021 | EP | 3778981 A1 | 17-02-2021 |
| | | | JP | 2019178389 A | 17-10-2019 |
| | | | KR | 20200135387 A | 02-12-2020 |
| | | | WO | 2019188763 A1 | 03-10-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5609921 A
- US 6579573 B2
- US 20060222777 A1
- US 20190242001 A1
- US 10279365 B2

### Non-patent literature cited in the description

- **VANEVERY et al.** *Journal of Thermal Spray Technology,* 2011, vol. 20 (4), 817-828
- **L. PAWLOWSKI.** *Surface & Coatings Technology,* 2009, vol. 203 (19), 2807-2829
- **CURRY et al.** *Coatings,* 2015, vol. 5, 338-356
- **KITAMURA et al.** *Journal of Thermal Spray Technology,* 2011, vol. 20 (1-2), 170-185
- **AGHASIBEIG et al.** *Journal of Thermal Spray Technology,* 2019, vol. 28, 1579-1605
- **KIILAKOSKI et al.** *Journal of Thermal Spray Technology,* 2019, vol. 28, 1933-1944